# FASCICULE DE BREVET EUROPEEN

(11) **EP 3 473 141 B1**
(45) Date de publication et mention de la délivrance du brevet: **22.03.2023**
(21) Numéro de dépôt: 18200579.3
(22) Date de dépôt: 16.10.2018
(51) Int. Cl.: A47G 21/14

(54) **SUPPORT DE COUTEAUX AVEC SYSTEME D AFFÛTAGE**
MESSERHALTERUNG MIT SCHLEIFSYSTEM
KNIFE HOLDER WITH SHARPENING SYSTEM

(30) Priorité: 19.10.2017 FR 1759857
(43) Date de publication de la demande: 24.04.2019
(73) Titulaire: SEB S.A., 69130 Ecully (FR)
(72) Inventeur: PLICHON, Stéphane, 74350 Allonzier-La-Caille (FR); NYS, Nicolas, 74650 Chavanod (FR)
(74) Mandataire: SEB Développement

(56) Documents cités:
- EP-A1- 3 189 753
- US-A1- 2013 306 500

## Description

La présente invention concerne un support pour maintenir des articles de coutellerie, comprenant notamment des couteaux et/ou d'autres ustensiles, par exemple des ciseaux. La présente invention concerne plus particulièrement un support de couteaux, tel qu'un bloc-couteau, comportant un système d'affûtage d'une lame de couteaux.

On notera que, dans ce document, les termes « longitudinal », « transversal », « horizontal », « vertical », « inférieur », « supérieur », « haut », « bas », employés pour décrire le support, font référence à ce support en situation d'usage, lorsqu'il est posé sur un plan horizontal.

Après une utilisation répétée, une lame de couteau nécessite afin d'améliorer les performances de coupe de la lame. Ainsi, il est important d'avoir un accessoire d'affûtage qui est disponible dans la cuisine afin d'affûter régulièrement la lame pour restaurer sa performance de coupe.

Il est connu du document US2013237137 un support de couteaux comportant un bâti, un dispositif de maintien destiné à recevoir des couteaux, et un système d'affûtage destiné à affûter une lame desdits couteaux. Le système d'affûtage comprend un socle et au moins un organe d'affûtage qui est solidaire du socle. Le socle est mobile par rapport au bâti entre une position de rangement dans laquelle le socle est à l'intérieur du bâti et une position de préhension dans laquelle le socle est sorti du bâti. Il est également connu d'autres blocs de rangement de couteaux intégrant des dispositifs d'affûtage à partir des documents US2013/306500 et EP 3189753.

Le socle d'un tel système d'affûtage est escamotable du support de couteaux. Le socle est monté en rotation sur le bâti entre sa position de rangement dans laquelle l'organe d'affûtage est rangé à l'intérieur du bâti et n'est pas accessible pour effectuer une opération d'affûtage et une position de préhension dans laquelle l'organe d'affûtage est sorti du bâti et peut être engagé par une lame. Un tel support de couteau comporte un système d'affûtage qui peut être déployé pour effectuer une opération d'affûtage de la lame de couteaux et qui peut être aussi rangé et stocké dans le bâti pendant le reste du temps.

Cependant, le socle d'un tel système d'affûtage est solidaire du bâti, c'est-à-dire qu'il reste toujours un attachement physique entre le système d'affûtage et le bâti et ne peut être séparé du bâti. L'utilisateur est obligé d'effectuer une opération d'affûtage de la lame à un endroit précis près du support de couteaux, avec une accessibilité limitée.

De plus, lorsque le support est placé dans un endroit où l'espace est insuffisant pour que l'utilisateur puisse affûter la lame de couteaux, l'utilisateur doit déplacer l'ensemble du support qui est généralement lourd afin d'avoir plus d'espace pour réaliser l'opération d'affutage. Il est aussi dangereux pour l'utilisateur de porter un support rempli de couteaux et de le déplacer. Les couteaux risquent de glisser et tomber du support pendant son déplacement.

Le but de la présente invention est de remédier aux inconvénients précités et de proposer un support de couteaux avec système d'affûtage amovible, qui peut être enlevé ou retiré du support de couteaux, présentant une ergonomie améliorée pour une utilisation plus sûre.

Un autre but de l'invention est de proposer un support de couteaux avec système d'affûtage présentant une conception simple et économique à mettre en oeuvre.

Ces buts sont atteints avec un support de couteaux comportant un bâti, un dispositif de maintien destiné à recevoir des couteaux, et un système d'affûtage destiné à affûter une lame desdits couteaux, le système d'affûtage comprenant un socle et au moins un organe d'affûtage qui est solidaire du socle, le socle étant mobile par rapport au bâti entre une position de rangement dans laquelle le socle est à l'intérieur du bâti et une position de préhension dans laquelle le socle est partiellement sorti du bâti, le socle étant maintenu au système d'affûtage par au moins un élément magnétique, le socle pouvant être séparé du support de couteaux sans lien physique lorsqu'il est dans sa position de préhension pour effectuer une opération d'affûtage de la lame.

Avec une telle construction, le socle muni d'au moins un organe d'affûtage peut être à la fois rangé et stocké dans le bâti du support pour économiser de l'espace de rangement dans la cuisine, et séparé du support pour permettre à l'utilisateur d'effectuer une opération d'affûtage de la lame de couteaux dans de bonnes conditions d'utilisation dans un endroit adapté, par exemple sur le bord d'un plan de travail. Ainsi le système d'affûtage n'est pas solidaire du bâti, c'est-à-dire qu'il peut être enlevé et devenir indépendant du bâti, ainsi il ne reste aucun attachement physique entre le système d'affûtage et le bâti.

De plus, le maintien du socle par au moins un élément magnétique présente une utilisation très simple et intuitive. Lorsque le socle est maintenu au système d'affûtage dans sa position de préhension, l'utilisateur peut séparer facilement et rapidement le socle du support en faisant un simple geste.

Par l'expression « positon de préhension », il faut comprendre au sens de l'invention que le socle qui est sorti partiellement du bâti, présente une zone de préhension que l'utilisateur peut facilement saisir.

Par le terme « séparer », il faut comprendre au sens de l'invention détacher, disjoindre, dissocier, isoler, c'est-à-dire non lié physiquement ou indépendant.

De préférence, le socle est maintenu au système d'affûtage par deux éléments magnétiques ou par un élément magnétique et un élément ferromagnétique.

Soit l'un des deux éléments magnétiques ou soit l'élément magnétique ou l'élément ferromagnétique est solidaire du bâti et l'autre élément est solidaire du socle. Les deux éléments sont configurés pour s'attirer afin de maintenir le socle dans le support.

De préférence, le socle est mobile en translation par rapport au bâti entre sa position de rangement et sa position de préhension.

Ainsi, l'utilisateur pousse le socle pour le faire passer de sa position de rangement dans sa position de préhension où il applique ensuite une force supplémentaire afin de vaincre la force d'attraction de l'au moins un élément magnétique pour permettre de séparer le socle du support. Réciproquement, l'utilisateur approche le socle vers sa position de préhension dans laquelle le socle est attiré et maintenu au support par l'au moins un élément magnétique. L'utilisateur pousse ensuite le socle pour le faire passer de sa position de préhension dans sa position de rangement.

De manière avantageuse, le socle est mobile en translation selon une direction transversale perpendiculaire à une direction d'extension verticale du bâti.

Ainsi, lorsque le bâti est posé sur un plan horizontal, le socle peut être retiré et rangé horizontalement.

De préférence, le système d'affûtage comporte un mécanisme rétractable du type stylo à bille rétractable, une pression appliquée sur le socle dans sa position de rangement permettant de le faire passer dans sa position de préhension, et réciproquement.

L'utilisation du mécanisme rétractable du type stylo à bille rétractable permet de manoeuvrer rapidement le socle entre sa position de rangement et sa position de préhension, en poussant simplement sur le socle. Le mécanisme rétractable du type stylo à bille rétractable est un système compact et efficace.

De plus, l'utilisation d'un tel mécanisme rétractable permet de ne pas avoir de bouton de préhension sur une face externe du socle.

Dans une réalisation préférentielle, le mécanisme rétractable comporte un bouchon, une came et un piston, le piston étant mobile en translation par rapport au bâti entre une position rentrée dans laquelle le socle est dans sa position de rangement et une position sortie dans laquelle le socle est dans sa position de préhension, le socle étant maintenu au piston par l'au moins un élément magnétique.

Le socle suit le mouvement en translation du piston du mécanisme rétractable lorsque le socle est maintenu au piston par l'au moins un élément magnétique.

De préférence, l'au moins un élément magnétique est solidaire du piston, et le socle comporte une plaque ferromagnétique, l'au moins un élément magnétique exerçant une force d'attraction sur la plaque ferromagnétique pour maintenir le socle au piston.

La surface de la plaque ferromagnétique est plus grande que celle de l'au moins un élément magnétique. La plaque ferromagnétique n'a pas besoin d'être positionnée parfaitement au centre du piston pour assurer un bon contact de maintien du socle. Ainsi, une telle construction permet d'absorber les tolérances de fabrication et de positionnement de la plaque ferromagnétique tout en assurant un bon maintien par l'au moins un élément magnétique. En conséquence, une telle construction est peu coûteuse et facile à mettre en oeuvre.

Avantageusement, le socle comprend un corps plastique, la plaque ferromagnétique étant agencée à l'intérieur du corps plastique.

La plaque ferromagnétique est faite d'un matériau ferromagnétique qui peut être sensible à l'oxydation. Ainsi, la plaque ferromagnétique est protégée par le corps plastique contre l'oxydation.

De préférence, le système d'affûtage comporte un dispositif de maintien du socle dans sa position de rangement.

Le piston du mécanisme rétractable n'est pas maintenu en position lorsqu'il est dans sa position rentrée. En effet, le piston en position rentrée présente une course libre dû à la construction du mécanisme rétractable. Le socle est solidaire du piston lorsqu'il est en position de rangement. Ainsi, le socle présente aussi la course libre dans sa position de rangement. Le dispositif de maintien permet de maintenir le socle dans sa position de rangement et de l'empêcher de se déplacer sur sa course libre. En conséquence, le socle est immobilisé dans sa position de rangement grâce au dispositif de maintien.

De préférence, le dispositif de maintien comporte une lamelle dont une extrémité libre est munie d'une protubérance ainsi qu'un bossage disposé sur une paroi de fond du socle, la protubérance coopérant avec le bossage pour permettre de maintenir le socle lorsqu'il est dans sa position de rangement.

Ainsi, la protubérance à l'extrémité libre de la lamelle est agencée derrière le bossage lorsque le socle est dans sa position de rangement permettant de bloquer le socle dans sa position de rangement. La déformation élastique de la lamelle permet à la protubérance de passer au-dessous du bossage pour que le socle quitte sa position de rangement vers sa position de préhension lorsque le piston passe de sa position entrée à sa position sortie.

De préférence, le mécanisme rétractable est démontable sans outils du support de couteaux.

Le mécanisme rétractable est conçu pour être facilement démontable sans outils pour le nettoyage, le remplacement et/ou la réparation des pièces.

On comprendra mieux les buts, aspects et avantages de la présente invention, d'après la description donnée ci-après d'un mode particulier de réalisation de l'invention présenté à titre d'exemples non limitatifs, en se référant aux dessins annexés dans lesquels :
- La figure 1 est une vue en perspective d'un support de couteaux selon un mode particulier de réalisation de l'invention,
- La figure 2 est une vue en perspective d'un système d'affûtage de la figure 1, le socle étant dans sa position de rangement,
- La figure 3 est une vue en perspective du système d'affûtage de la figure 1, le socle étant dans sa position de préhension,

- La figure 4 est une vue de coupe du système d'affûtage, suivant la ligne de coupe IV-IV de la figure 2,
- La figure 5 est une vue de coupe du système d'affûtage, suivant la ligne de coupe V-V de la figure 3,
- La figure 6 est une vue en perspective du socle de la figure 3 avec le corps plastique,
- La figure 7 est une vue en perspective du socle de la figure 6 sans le corps plastique,
- La figure 8 est une vue en éclaté du mécanisme rétractable de la figure 1.

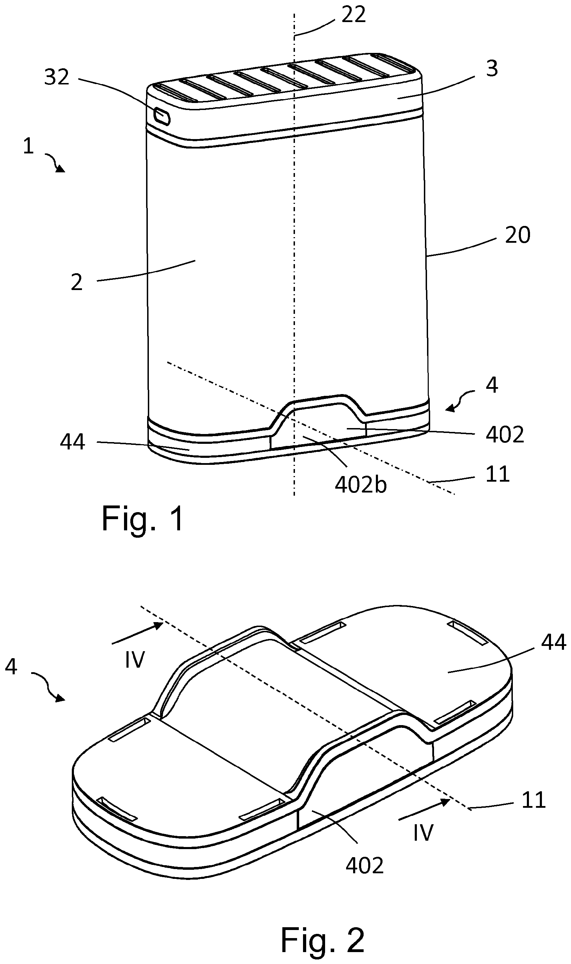

Le mode particulier de réalisation de la présente invention décrit ci-dessous concerne un support de couteaux, tel qu'un bloc-couteau, comportant un système d'affûtage d'une lame d'un des couteaux. Comme illustré à la figure 1, le support 1, en forme de parallélépipède rectangle, possède un dispositif de maintien 3 qui est destiné à recevoir et maintenir des articles de coutellerie, notamment des couteaux. Le support 1 comporte aussi un bâti 2 qui s'étend selon une direction d'extension 22 verticale. Le dispositif de maintien 3 est agencé au-dessus du bâti 2 de manière amovible via un système de clippage 32. Le bâti 2 comporte une paroi latérale 20 qui est réalisée d'une matière transparente tel que le verre ou le copolymère styrène-acrylonitrile (SAN) pour permettre que l'utilisateur puisse reconnaitre le type de couteau inséré dans le bâti 2 à travers la paroi latérale 20.

Le support 1 comporte un système d'affûtage 4 de la lame de couteaux qui est agencé sur une partie inférieure du support 1, en dessous du bâti 2. Tel qu'illustré à la figure 2, le système d'affûtage 4 comprend une base 44 qui est agencée en dessous du bâti 2. La base 44 est démontable du bâti 2 permettant de faciliter le nettoyage de l'ensemble du système d'affûtage 4.

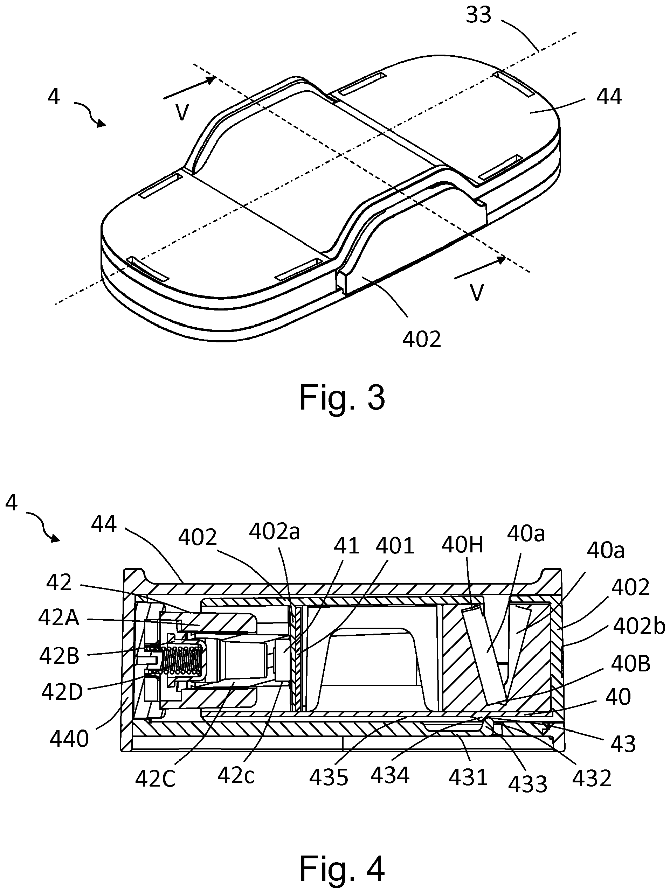

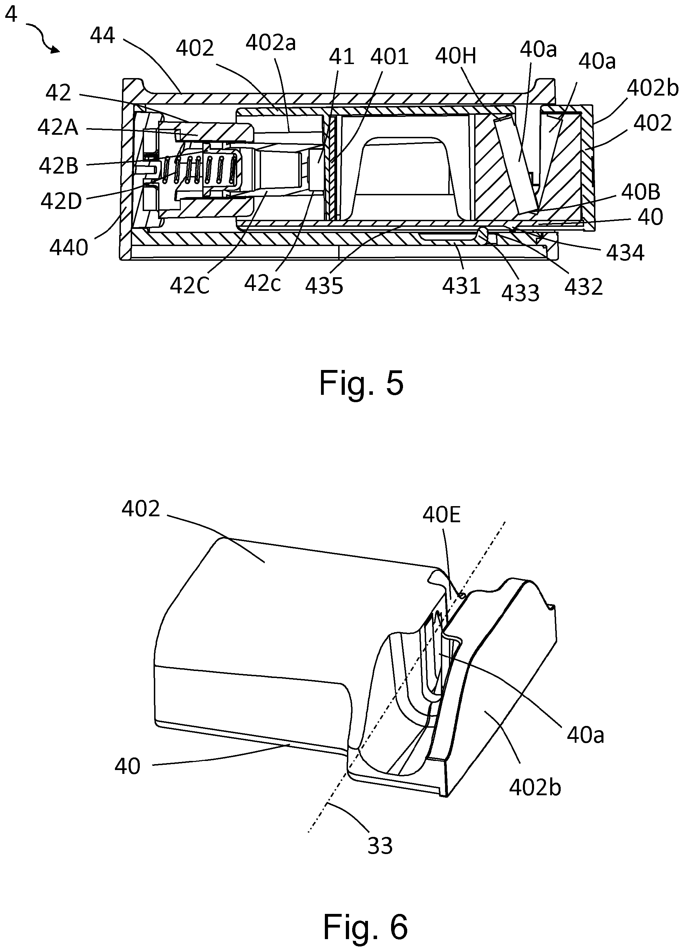

Conformément aux figures 2 à 5, le système d'affûtage 4 comporte un socle 40 qui est agencé à l'intérieur de la base 44. Le socle 40 est mobile en translation par rapport à la base 44 selon une direction transversale 11 perpendiculaire à la direction d'extension 22 verticale du bâti 2. Le socle 40 est mobile entre une position de rangement dans laquelle le socle 40 est à l'intérieur du bâti 2 comme illustré aux figures 2, 4 et une position de préhension dans laquelle le socle 40 est partiellement sorti du bâti 2 comme illustré aux figures 3, 5.

En se référant aux figures 4 et 5, le système d'affûtage 4 comporte un mécanisme rétractable 42 qui est agencé sur une paroi latérale 440 de la base 44. Le mécanisme rétractable 42 est un système du type stylo à bille rétractable. Le mécanisme rétractable 42 comporte un ressort 42D, une came 42B, un bouchon 42A et un piston 42C. Le principe d'un tel mécanisme rétractable est bien connu de l'homme du métier notamment dans le document US3137276. Ainsi, nous n'allons pas détailler dans la présente invention le principe du mécanisme rétractable 42.

En plus, le mécanisme rétractable 42 comporte un élément magnétique 41 en forme de disque qui est agencé dans une cavité 42c cylindrique du piston 42C. Par élément magnétique, on comprend un aimant permanent qui peut exercer une force d'attraction sur tout matériau ferromagnétique. L'élément magnétique 41 peut être par exemple un aimant néodyme. Le socle 40 comporte une plaque ferromagnétique 401 qui est agencée verticalement sur une paroi de fond 435 du socle 40. L'élément magnétique 41 exerce une force d'attraction sur la plaque ferromagnétique 401 pour permettre de maintenir le socle 40 au piston 42C du mécanisme rétractable 42. Le socle 40 comporte un corps plastique 402. La plaque ferromagnétique 401 est agencée à l'intérieur du corps plastique 402. Le corps plastique 402 comporte une paroi intermédiaire 402a qui est disposée entre l'élément magnétique 41 et la plaque ferromagnétique 401 afin d'éviter un contact direct entre l'élément magnétique 41 et la plaque ferromagnétique 401. Ainsi, la plaque ferromagnétique 401 est protégée par le corps plastique 402 contre l'oxydation.

Le piston 42C du mécanisme rétractable 42 est mobile en translation selon la direction transversale 11 entre une position entrée dans laquelle le socle 40 est dans sa position de rangement et une position sortie dans laquelle le socle 40 est dans sa position de préhension. Le socle 40 suit le mouvement en translation du piston 42C lorsque le socle 40 est maintenu au piston 42C par l'élément magnétique 41. Le mécanisme rétractable 42 permet de manoeuvrer rapidement le socle 40 entre sa position de rangement et sa position de préhension, en poussant simplement sur le corps plastique 402 du socle 40.

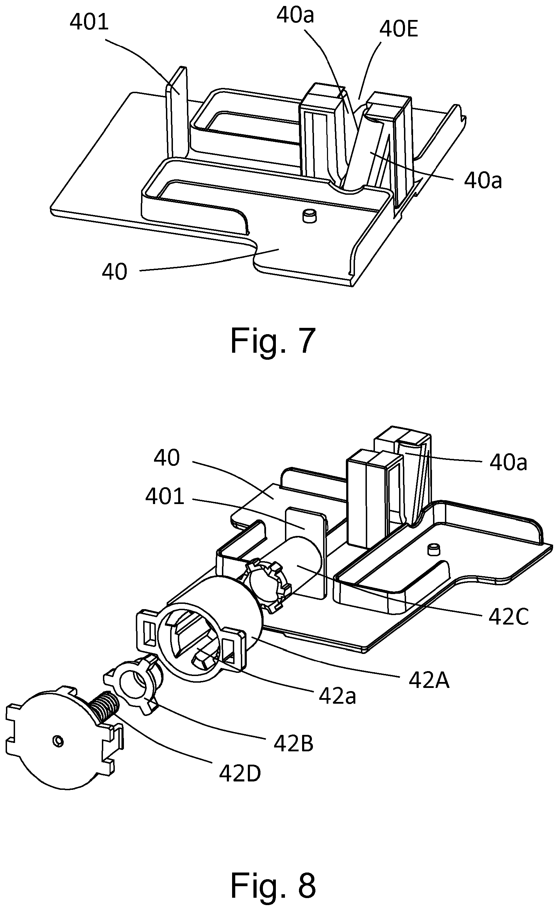

Comme le montrent les figures 4 et 5, le système d'affûtage 4 comporte un dispositif de maintien 43 du socle 40 dans sa position de rangement. Quand le piston 42C est dans sa position entrée dans laquelle le socle 40 est dans sa position de rangement, le piston 42C du mécanisme rétractable 42 n'est pas maintenu en position et présente une course libre dû à la construction du mécanisme rétractable 42. Tel qu'illustré à la figure 8, cette course libre du piston 42C est notamment liée à la géométrie des rainures 42a du bouchon 42A. Ainsi, lorsque le piston 42C est dans sa position entrée, le socle 40 dans sa position de rangement présente aussi la course libre. Le dispositif de maintien 43 permet donc de maintenir le socle 40 dans sa position de rangement et de l'empêcher de déplacer sur sa course libre.

En se référant aux figures 4 et 5, le dispositif de maintien 43 comporte une lamelle 431 dont une extrémité libre 432 est munie d'une protubérance 433 ainsi qu'un bossage 434 disposé sur la paroi de fond 435 du socle 40. La protubérance 433 à l'extrémité libre 432 de la lamelle 431 est agencée derrière le bossage 434 lorsque le socle 40 est dans sa position de rangement permettant de bloquer le socle 40 dans sa position de rangement. Lorsqu'on pousse sur le corps plastique 402 du socle 40 dans sa position de rangement, le ressort 42D du mécanisme rétractable 42 est configuré pour appliquer une force de rappel sur le socle 40 pour entraîner une déformation de la lamelle 431 permettant à la protubérance 433 de passer au-dessous du bossage 434 pour que le socle 40 quitte sa position de rangement vers sa position de préhension.

De plus, Le système d'affûtage 4 comporte deux organes d'affûtage 40a qui sont installés sur le socle 40, les deux organes d'affûtage 40a étant solidaires du socle 40. Les deux organes d'affûtage 40a sous forme de cylindre sont réalisés en une matière très dure, par exemple en tungstène. Chaque organe d'affûtage 40a comporte une extrémité haute 40H et une extrémité basse 40B. Tel qu'illustrée aux figures 6 et 7, une entrée d'insertion 40E de la lame de couteaux est formée entre deux extrémités haute 40H des deux organes d'affûtage 40a. Les deux organes d'affûtage 40a sont agencés côte-à-côte de manière à ce qu'ils forment une zone d'affûtage en V suivant une direction longitudinale 33 perpendiculaire à la direction transversale 11.

En fonctionnement, lorsque l'utilisateur souhaite effectuer une opération d'affûtage de la lame d'un couteau, il pousse d'abord avec son doigt selon la direction transversale 11 sur une surface externe 402b du corps plastique 402 du socle 40 en position de rangement. Sous l'action de l'utilisateur, le ressort 42D du mécanisme rétractable 42 est comprimé pour restituer une force de rappel sur le socle 40 pour entrainer une déformation de la lamelle 431 permettant à la protubérance 433 de passer au-dessous du bossage 434. Ainsi, le socle 40 quitte sa position de rangement vers sa position de préhension. Lorsque le socle 40 est arrivé à sa position de préhension dans laquelle le corps plastique 402 du socle 40 est partiellement sorti du bâti 2, l'utilisateur saisit une zone de préhension du corps plastique 402 qui est sortie du bâti 2 et tire l'ensemble du socle 40 afin de vaincre la force d'attraction de l'élément magnétique 41 pour permettre de séparer le socle 40 du support 1. Enfin, l'utilisateur peut porter le socle 40 comportant les organes d'affûtage 40a dans un endroit adapté, par exemple sur le bord d'un plan de travail pour effectuer une opération d'affûtage de la lame d'un couteau.

Une fois que l'opération d'affûtage est terminée, l'utilisateur saisit le socle 40 et l'approche vers sa position de préhension dans le bâti 2. Le socle 40 est ensuite attiré et maintenu au mécanisme rétractable 42 par l'élément magnétique 41. Puis, l'utilisateur pousse le socle 40 pour le faire passer de sa position de préhension dans sa position de rangement et la protubérance 433 de la lamelle 431 passe derrière le bossage 434 afin d'immobiliser le socle 40 dans sa position de rangement. En conséquence, le socle 40 est rangé dans le bâti 2.

Bien entendu, l'invention n'est nullement limitée au mode de réalisation décrit et illustré qui n'a été donné qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le maintien du socle au système d'affûtage peut être réalisé par deux éléments magnétiques qui s'attirent, dont l'un est solidaire du socle et l'autre est solidaire du mécanisme rétractable.

Dans une variante de réalisation, le socle est mobile en translation selon la direction d'extension verticale du bâti.

## Revendications

1. Support de couteaux (1) comportant
- un bâti (2),
- un dispositif de maintien (3) destiné à recevoir des couteaux, et
- un système d'affûtage (4) destiné à affûter une lame desdits couteaux, ledit système d'affûtage comprenant un socle (40) et au moins un organe d'affûtage (40a) qui est solidaire du socle (40), le socle (40) étant mobile par rapport au bâti (2) entre une position de rangement dans laquelle le socle (40) est à l'intérieur du bâti (2) et une position de préhension dans laquelle le socle (40) est partiellement sorti du bâti (2), le socle (40) étant maintenu au système d'affûtage (4) par au moins un élément magnétique (41), **caractérisé en ce que** le socle peut être séparé du support de couteaux (1) sans lien physique lorsqu'il est dans sa position de préhension pour effectuer une opération d'affûtage de la lame.

2. Support de couteaux (1) selon la revendication 1, **caractérisé en ce que** le socle (40) est maintenu au système d'affûtage (4) par deux éléments magnétiques ou par un élément magnétique (41) et un élément ferromagnétique.

3. Support de couteaux (1) selon l'une quelconque des revendications précédentes, **caractérisé en ce que** le socle (40) est mobile en translation par rapport au bâti (2) entre sa position de rangement et sa position de préhension.

4. Support de couteaux (1) selon la revendication 3, **caractérisé en ce que** le socle (40) est mobile en translation selon une direction transversale (11) perpendiculaire à une direction d'extension (22) verticale du bâti (2).

5. Support de couteaux (1) selon l'une quelconque des revendications précédentes, **caractérisé en ce que** le système d'affûtage (4) comporte un mécanisme rétractable (42) du type stylo à bille rétractable, une pression appliquée sur le socle (40) dans sa position de rangement permettant de le faire passer dans sa position de préhension, et réciproquement.

6. Support de couteaux (1) selon la revendication 5, **caractérisé en ce que** le mécanisme rétractable (42) comporte un bouchon (42A), une came (42B) et un piston (42C), le piston (42C) étant mobile en translation par rapport au bâti (2) entre une position rentrée dans laquelle le socle (40) est dans sa position de rangement et une position sortie dans laquelle le socle (40) est dans sa position de préhension, le socle (40) étant maintenu au piston (42C) par l'au moins un élément magnétique (41).

7. Support de couteaux (1) selon la revendication 6, **caractérisé en ce que** l'au moins un élément magnétique (41) est solidaire du piston (42C), et **en ce que** le socle (40) comporte une plaque ferromagnétique (401), l'au moins un élément magnétique (41) exerçant une force d'attraction sur la plaque ferromagnétique (401) pour maintenir le socle (40) au piston (42C).

8. Support de couteaux (1) selon la revendication 7, **caractérisé en ce que** le socle (40) comprend un corps plastique (402), la plaque ferromagnétique (401) étant agencée à l'intérieur du corps plastique (402).

9. Support de couteaux (1) selon l'une quelconque des revendications précédentes, **caractérisé en ce que** le système d'affûtage (4) comporte un dispositif de maintien (43) du socle (40) dans sa position de rangement.

10. Support de couteaux (1) selon la revendication 8, **caractérisé en ce que** le dispositif de maintien (43) comporte une lamelle (431) dont une extrémité libre (432) est munie d'une protubérance (433) ainsi qu'un bossage (434) disposé sur une paroi de fond (435) du socle (40), la protubérance (433) coopérant avec le bossage (434) pour permettre de maintenir le socle (40) dans sa position de rangement.

## Patentansprüche

1. Messerhalterung (1), umfassend
- ein Gestell (2),
- eine Haltevorrichtung (3), die dazu vorgesehen ist, Messer aufzunehmen, und
- ein Schleifsystem (4), das dazu vorgesehen ist, eine Klinge der Messer zu schleifen, wobei das Schleifsystem einen Standsockel (40) und mindestens ein Schleifteil (40a), das fest mit dem Standsockel (40) verbunden ist, umfasst, wobei der Standsockel (40) in Bezug auf das Gestell (2) zwischen einer Aufbewahrungsposition, bei der der Standsockel (40) im Inneren des Gestells (2) ist, und einer Greifposition, bei der der Standsockel (40) teilweise aus dem Gestell (2) herausgezogen ist, beweglich ist,
wobei der Standsockel (40) durch mindestens ein magnetisches Teil (41) am Schleifsystem (4) gehalten wird, **dadurch gekennzeichnet, dass** der Standsockel ohne physische Verbindung von der Messerhalterung (1) getrennt sein kann, wenn er in seiner Greifposition ist, um einen Schleifvorgang der Klinge durchzuführen.

2. Messerhalterung (1) nach Anspruch 1, **dadurch gekennzeichnet, dass** der Standsockel (40) durch zwei magnetische Teile oder durch ein magnetisches Teil (41) und ein ferromagnetisches Teil am Schleifsystem (4) gehalten wird.

3. Messerhalterung (1) nach einem der vorstehenden Ansprüche, **dadurch gekennzeichnet, dass** der Standsockel (40) in Bezug auf das Gestell (2) zwischen seiner Aufbewahrungsposition und seiner Greifposition verschiebbar ist.

4. Messerhalterung (1) nach Anspruch 3, **dadurch gekennzeichnet, dass** der Standsockel (40) entlang einer querverlaufenden Richtung (11), die senkrecht zu einer vertikalen Erstreckungsrichtung (22) des Gestells (2) ist, verschiebbar ist.

5. Messerhalterung (1) nach einem der vorstehenden Ansprüche, **dadurch gekennzeichnet, dass** das Schleifsystem (4) einen versenkbaren Mechanismus (42) vom Druckkugelschreibertyp umfasst, wobei ein Druck, der auf den Standsockel (40) in seiner Aufbewahrungsposition angelegt wird, ermöglicht, diesen in seine Greifposition übergehen zu lassen und umgekehrt.

6. Messerhalterung (1) nach Anspruch 5, **dadurch gekennzeichnet, dass** der versenkbare Mechanismus (42) einen Verschluss (42A), eine Nocke (42B) und einen Kolben (42C) umfasst, wobei der Kolben (42C) in Bezug auf das Gestell (2) zwischen einer eingezogenen Position, bei der der Standsockel (40) in seiner Aufbewahrungsposition ist, und einer herausgezogenen Position, bei der der Standsockel (40) in seiner Greifposition ist, verschiebbar ist, wobei der Standsockel (40) durch das mindestens eine magnetische Teil (41) am Kolben (42C) gehalten wird.

7. Messerhalterung (1) nach Anspruch 6, **dadurch gekennzeichnet, dass** das mindestens eine magnetische Teil (41) fest mit dem Kolben (42C) verbunden ist und dadurch, dass der Standsockel (40) eine ferromagnetische Platte (401) umfasst, wobei das mindestens eine magnetische Teil (41) eine Anziehungskraft auf die ferromagnetische Platte (401) ausübt, um den Standsockel (40) am Kolben (42C) zu halten.

8. Messerhalterung (1) nach Anspruch 7, **dadurch gekennzeichnet, dass** der Standsockel (40) einen verformbaren Körper (402) umfasst, wobei die ferromagnetische Platte (401) im Inneren des verformbaren Körpers (402) eingerichtet ist.

9. Messerhalterung (1) nach einem der vorstehenden Ansprüche, **dadurch gekennzeichnet, dass** das Schleifsystem (4) eine Haltevorrichtung (43) des Sockels (40) in seiner Aufbewahrungsposition umfasst.

10. Messerhalterung (1) nach Anspruch 8, **dadurch gekennzeichnet, dass** die Haltevorrichtung (43) eine Lamelle (431) umfasst, bei der ein freies Ende (432) mit einem Vorsprung (433) sowie einer Anhebung (434), die auf einer Bodenwand (435) des Standsockels (40) angeordnet ist, ausgestattet ist, wobei der Vorsprung (433) mit der Anhebung (434) zusammenwirkt, um zu ermöglichen, den Standsockel (40) in seiner Aufbewahrungsposition zu halten.

## Claims

1. Knife holder (1) comprising
- a casing (2),
- a holding device (3) intended to receive knives, and
- a sharpening system (4) intended to sharpen a blade of said knives, said sharpening system comprising a base (40) and at least one sharpening member (40a) which is integral with the base (40), the base (40) being movable with respect to the casing (2) between a storage position wherein the base (40) is inside the casing (2) and a gripping position wherein the base (40) partially exits from the casing (2),
the base (40) being held to the sharpening system (4) by at least one magnetic element (41), **characterised in that** the base can be separated from the knife holder (1) without a physical link when it is in its gripping position to perform an operation of sharpening the blade.

2. Knife holder (1) according to claim 1, **characterised in that** the base (40) is held to the sharpening system (4) by two magnetic elements or by a magnetic element (41) and a ferromagnetic element.

3. Knife holder (1) according to any one of the preceding claims, **characterised in that** the base (40) is movable in translation with respect to the casing (2) between its storage position and its gripping position.

4. Knife holder (1) according to claim 3, **characterised in that** the base (40) is movable in translation in a transverse direction (11) perpendicular to a vertical extension direction (22) of the casing (2).

5. Knife holder (1) according to any one of the preceding claims, **characterised in that** the sharpening system (4) comprises a retractable mechanism (42) of the retractable ball pen type, a pressure applied on the base (40) in its storage position making it possible make it pass into its gripping position, and reciprocally.

6. Knife holder (1) according to claim 5, **characterised in that** the retractable mechanism (42) comprises a stopper (42A), a cam (42B) and a piston (42C), the piston (42C) being movable in translation with respect to the casing (2) between a retracted position wherein the base (40) is in its storage position and an exit position wherein the base (40) is in its gripping position, the base (40) being held to the piston (42C) by the at least one magnetic element (41).

7. Knife holder (1) according to claim 6, **characterised in that** the at least one magnetic element (41) is integral with the piston (42C), and **in that** the base (40) comprises a ferromagnetic plate (401), the at least one magnetic element (41) exerting an attraction force on the ferromagnetic plate (401) to hold the base (40) to the piston (42C).

8. Knife holder (1) according to claim 7, **characterised in that** the base (40) comprises a plastic body (402), the ferromagnetic plate (401) being arranged inside the plastic body (402).

9. Knife holder (1) according to any one of the preceding claims, **characterised in that** the sharpening system (4) comprises a device for holding (43) the base (40) in its storage position.

10. Knife holder (1) according to claim 8, **characterised in that** the holding device (43) comprises a blade (431), a free end (432) of which is equipped with a projection (433) as well as a boss (434) disposed on a bottom wall (435) of the base (40), the projection (433) engaging with the boss (434) to make it possible to hold the base (40) in its storage position.
